# EUROPEAN PATENT APPLICATION

(11) **EP 0 747 544 A1**
(43) Date of publication of application: **11.12.1996**
(21) Application number: 96304240.3
(22) Date of filing: 06.06.1996
(51) Int. Cl.: E03D 1/14, E03D 1/01

(54) **Water saving in toilet tanks**

(30) Priority: 07.06.1995 US 474431
(71) Applicant: AMERICAN STANDARD INC., Piscataway, New Jersey 08855-6820 (US)
(72) Inventor: Bayot, Antonio G., Newton, Pennsylvania 19840 (US)
(74) Representative: Williams, Janice

(57) **Abstract**

A toilet tank (12) having integrally formed tank volume reducers (16) therein. The volume reducers (16) may be molded in one or more corners of the tank. The volume reducers act (16) to raise the volume height of the water in the tank which thus raises the center of gravity of the water considerably, allowing greater head pressure, thus improving the flushing performance of the bowl.

## Description

The present invention relates generally to toilet tanks, and may be applied in particular to gravity flush toilets.

Gravity flush toilets include a toilet bowl with a tank positioned thereon which holds a predetermined amount of water. The water in the tank, when released, generates a high velocity which carries bowl water and waste into the drain line. The weight of the water, due to gravity, is relied on to flush the bowl. Due to the increasing concern to conserve water, the allotted amount of gallons per flush (GPF) has been reduced from 3 to 5 GPF to less than or equal to 1.6 GPF. Consequently, the construction of toilets has changed to compensate for the low water consumption requirements. Changes in construction have included modifications in the design of the trapway, tank and flushing valves.

Particularly, modifications in the construction of tanks have included the insertion of panels or partitions to divide the flush tank into sequential compartments. A predetermined amount of water is thereby isolated and prevented from being used during flushing. The partitions act as dams, blocking off a portion of the tank thereby reducing the amount of water released into the bowl. Although these modifications have been beneficial in conserving water during flushing, the partitions have proven to be more successful with 3 to 5 gallon tanks which rely largely on the volume of the water to provide a strong flushing performance. The prior art does not address problems associated with the use of a lower volume of water. Moreover, none of the prior art shows components which are molded in a tank and which thereby change the volume of the tank while increasing flushing performance.

Thus, it is apparent that a new tank construction is desired to compensate for the decrease in the volume of water used during flushing. It is desirable that the tank provide flushing performance that is comparable or better than the flushing performance provided by tanks using greater GPF than 1.6 GPF. It is important that the tank design be such that it require little or no installation with respect to the addition of inserts therein.

According to an aspect of the present invention there is provided a tank for use in conjunction with a toilet having a bottom floor, a plurality of upstanding walls and a flushing apparatus comprising an integrally formed volume reducer disposed in said tank.

Embodiments of the invention increase the water volume height in a toilet tank.

Further embodiments increase the flushing performance of a toilet.

Further embodiments maximize the water contained in a tank.

Another aspect of the present invention provides a toilet tank having one or more integrally formed tank volume reducers therein. The volume reducers may be molded in one or more corners of the tank. The volume reducers act to raise the volume height of the water in the tank which thus raises the center of gravity of the water considerably, allowing greater head pressure, thus improving the flushing performance of the bowl.

Embodiments of the invention will now be described, by way of example, with reference to the accompanying drawings in which:
Fig. 1 is a schematic top plan view of a toilet tank embodying the invention;
Fig. 2 is a schematic cut-away view of a portion of the tank in Fig. 1;
Fig. 3 is an enlarged top plan view of a volume reducer shown in the tank in Fig. 1; and
Fig. 4 is a sectional view along line 4-4 in Fig. 3.

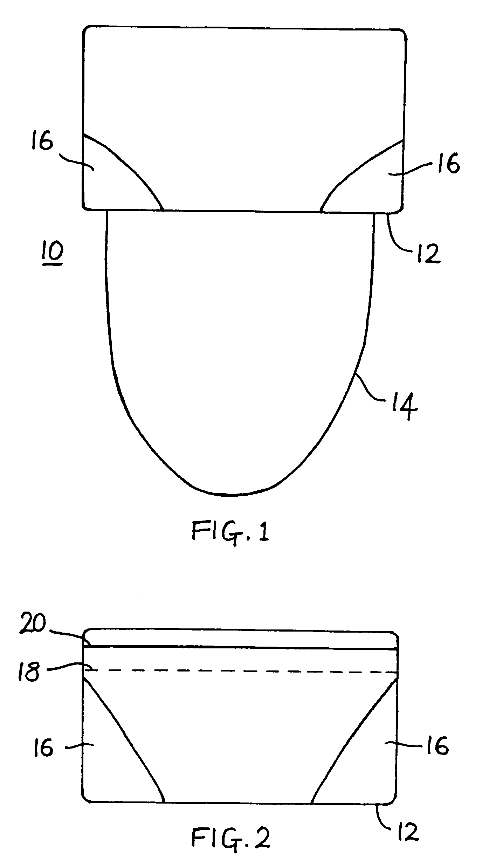

Reference is now made to Figs. 1 and 2 which depict a toilet tank and toilet combination 10 including tank 12 and toilet 14. The tank and toilet combination may be a one piece unit or may be comprised of two pieces. Tank 12 includes volume reducer components, indicated schematically at 16, disposed in the corners of the tank. It should be mentioned that this preferred location of components 16 is by no means a limitation. Volume reducer components 16 are typically located in the corners of tank 12 to prevent interference with other flushing components that are generally located in the central portion of tank 12. Components 16 are typically of a triangular cross-section to appropriately fit within the corner sections of tank 12 although the shape of the components may be any shape suitable to fit within tank 12. Accordingly, the shape and location of components 16 may vary depending on the overall design of the tank and components contained therein. Components 16 are typically disposed at a height of approximately three-fourths the height of the tank and disposed in a corner along approximately one fourth the length of each side of the tank which form the corner.

Tank 12 may contain as many components 16 that will fit therein without altering the height of the water to the point of overflow. Two components 16 are generally sufficient for altering the height of the water in tank 12. The insertion of components 16 in tank 12 displace the height of the water in tank 12, which is typically at a height 18, to a new height 20. This increase in water height increases the force at which the water will descend providing improved flushing performance.

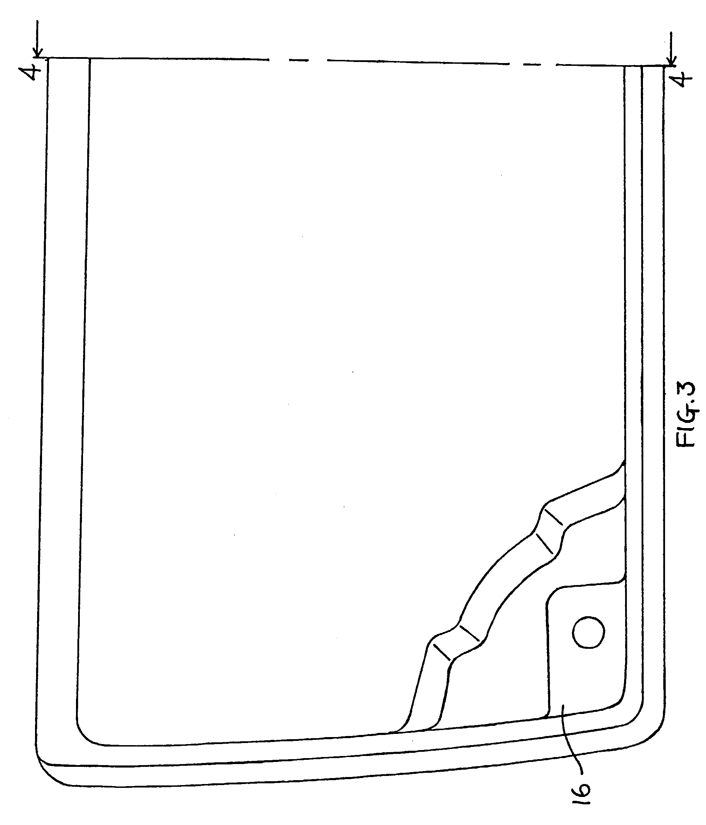

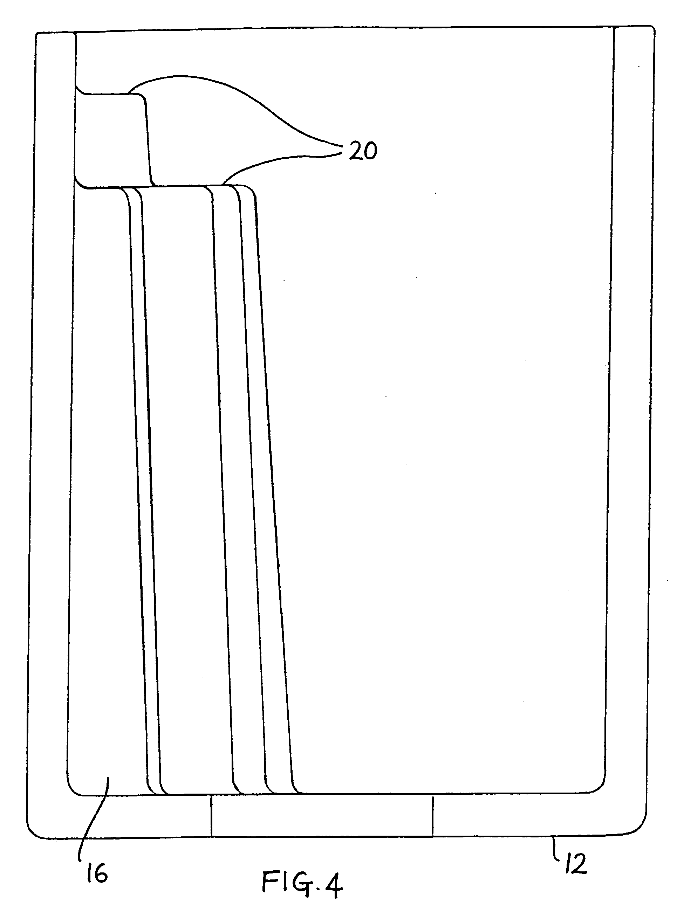

Components 16 may be molded in tank 12 during the molding process which may be any known method including but not limited to slip casting, extrusion, jiggering and pressing. Components 16 are typically fabricated of the same material as that of tank 12 which is typically vitreous china. Thus, components 16 are integrally formed in tank 12 obviating additional molding and installation steps. Since components 16 are fabricated of the same material as tank 12, there is no need or reason to replace or service the components. There are no corrosion or maintenance concerns, since the expected life of the components is the same as that of the tank. It is also possible to manufacture components 16 separately from tank 12 and to affix to tank 12 thereafter, although the preferred method is to mold components 16 integrally to tank 12. Components 16 may include a plurality of plateaus 20 as clearly shown in Figs. 3 and 4 to further increase the force on the water as it empties out of the tank.

The operation of the tank is as follows. When the toilet is flushed, the discharge outlet in the tank used for releasing the water from the tank is opened. Water begins to empty into the bowl of the toilet through the discharge outlet. Due to the presence of components 16, the water level is at an elevated height which results in a greater force on the water. This force provides improved flushing performance. The integrally formed tank volume reducers act to raise the volume height of the water in the tank which thus raises the center of gravity of the water considerably, allowing greater head pressure, thus improving the flushing performance of the bowl.

Although illustrative embodiments of the present invention have been described herein with reference to the accompanying drawings, it is to be understood that the invention is not limited to those precise embodiments and that various other changes and modifications may be effected therein by one skilled in the art without departing from the scope of the invention.

## Claims

1. A tank for use in conjunction with a toilet having a bottom floor, a plurality of upstanding walls and a flushing apparatus,comprising:
an integrally formed volume reducer disposed in said tank.

2. The tank of claim 1 wherein said volume reducer means is formed integrally in said tank when said tank is molded.

3. The tank of claim 2 wherein said volume reducer means is fabricated of vitreous china.

4. The tank of claim 1 wherein said volume reducer means comprises at least a first component and a second component, said first component positioned in a corner of said tank and said second component positioned in a corner in said tank which does not contain said first component.

5. The tank of claim 1 wherein said volume reducer means is substantially triangular in shape.

6. The tank of claim 1 wherein said volume reducer means is disposed at a height approximately three-fourths the height of said tank.

7. The tank of claim 2 wherein said volume reducer means includes a plurality of plateaus.

8. The tank of claim 4 wherein said volume reducer means further includes a third component positioned in a corner in said tank not containing said first and second components.

9. The tank of claim 8 wherein said volume reducer means further includes a fourth component positioned in a corner in said tank not containing said first, second and third components.
